# EUROPEAN PATENT SPECIFICATION

(11) **EP 4 280 093 B1**
(45) Date of publication and mention of the grant of the patent: **16.07.2025**
(21) Application number: 22925231.7
(22) Date of filing: 21.12.2022
(51) Int. Cl.: G06F 21/62

(54) **METHOD FOR PROCESSING EAR TEMPERATURE DATA, AND ELECTRONIC DEVICE**
OHRTEMPERATURDATENVERARBEITUNGSVERFAHREN UND ELEKTRONISCHE VORRICHTUNG
PROCÉDÉ DE TRAITEMENT DE DONNÉES DE TEMPÉRATURE D'OREILLE, ET DISPOSITIF ÉLECTRONIQUE

(30) Priority: 16.02.2022 CN 202210143572
(43) Date of publication of application: 22.11.2023
(73) Proprietor: Honor Device Co., Ltd., Shenzhen, Guangdong 518040 (CN)
(72) Inventor: HUANG, Jishun, Shenzhen, Guangdong 518040 (CN)
(74) Representative: Gill Jennings & Every LLP
(86) International application number: PCT/CN2022/140609
(87) International publication number: WO 2023/155588

(56) References cited:
- WO-A1-2016/023926
- CN-A- 106 551 682
- CN-A- 110 060 747
- CN-A- 111 931 151
- US-A1- 2017 332 236
- US-A1- 2018 060 555
- US-A1- 2020 273 566

## Description

This application claims priority to Chinese Patent Application No. 202210143572.X, filed with the China National Intellectual Property Administration on February 16, 2022 and entitled "EAR TEMPERATURE DATA PROCESSING METHOD AND ELECTRONIC DEVICE".

### TECHNICAL FIELD

This application relates to the field of intelligent terminal technologies, and specifically, to an ear temperature data processing method and an electronic device.

### BACKGROUND

Wireless headsets are favored by increasingly more users due to the following features in use: Each wireless headset has a structure independent of an electronic device, it is convenient to pair the wireless headset with the electronic device, and a battery life gradually increases. Therefore, wireless headsets are rapidly developed. With the development of the wireless headsets, in addition to improvement to audio quality of the wireless headset during audio listening, functions of the wireless headset are extended. For example, currently, some wireless headsets can be used to detect ear temperature data. However, because ear temperatures are sensitive personal data, there is a risk of private data leakage.

Patent document US2018/060555 related to security and privacy in ear-wearable devices is considered relevant prior art.

### SUMMARY

Embodiments of this application provide an ear temperature data processing method and an electronic device, to protect security of private data of a user.

According to a first aspect, an ear temperature data processing method is provided, including: A headset collects ear temperature data. In a first time period, a first electronic device is connected to the headset, and the first electronic device logs in to a first application by using a first account; and the first electronic device displays a first interface of the first application, where the first interface includes the ear temperature data collected by the headset in the first time period. In a second time period, in which a connection status between the first electronic device and the headset is "disconnected", the headset collects ear temperature data. In a third time period, in which a connection status between the first electronic device and the headset is "disconnected", a second electronic device is connected to the headset, and the second electronic device logs in to the first application by using a second account. In a fourth time period, in which a connection status between the second electronic device and the headset is "disconnected", the first electronic device is connected to the headset, and the first electronic device displays a second interface of the first application, where the second interface includes the ear temperature data collected by the headset in the first time period, and does not include the ear temperature data collected by the headset in the second time period. The first time period, the second time period, the third time period, and the fourth time period are consecutive time periods in sequence.

In the foregoing method, when the electronic device interacts with the headset, if an account for connecting to the headset changes, the headset deletes stored ear temperature data, so that when a new account is used to connect to the headset, an electronic device to which the new account is logged in cannot obtain ear temperature data of the previous account, thereby protecting privacy of ear temperature data of a user.

Optionally, in the third time period, the second electronic device displays a third interface, namely, the third interface of the first application, where the third interface includes: a first option and a second option. The first option may be an OK option, and the second option may be a Cancel option. The third interface may include prompt information, where the prompt information is used to prompt a user that if the OK option is selected, the headset deletes stored ear temperature data. The second electronic device further receives a first operation used to select the first option.

Optionally, in the third time period, after the second electronic device receives the first operation used to select the first option, the headset collects ear temperature data in the third time period, and the second electronic device displays a fourth interface of the first application. Because the headset deletes the previous ear temperature data, the fourth interface includes the ear temperature data collected by the headset in the third time period, and does not include the ear temperature data collected by the headset in the first time period and the temperature data collected by the headset in the second time period.

Optionally, that the first electronic device displays a first interface of the first application includes: The first electronic device receives a second operation, where the second operation may be a refresh operation on the first application interface; and the first electronic device displays the first interface of the first application in response to the second operation.

Optionally, the first account is bound to the headset. In the third time period, the second electronic device sends an identity verification request to the headset in response to a third operation performed on the second electronic device; the headset performs identity verification on the second account logged in to the second electronic device, and returns, to the second electronic device, prompt information including a verification result, where the verification result indicates that the headset is bound to the first account; the second electronic device displays a fifth interface, where the fifth interface includes the prompt information, a first option, and a second option, and the prompt information is further used to indicate that the headset deletes stored ear temperature data if the first option is selected; and the second electronic device receives a fourth operation used to select the first option.

Optionally, before the first time period, the first account is bound to the headset, where the step of binding the first account to the headset includes: The first electronic device obtains a pair of asymmetric keys by using a keystore, stores a private key in the asymmetric keys, and sends a public key in the asymmetric keys to the headset; and the headset stores the public key.

Optionally, that the headset performs identity verification on the second account logged in to the second electronic device includes: The headset sends a first random number to the second electronic device; and the electronic device signs the first random number by using a stored private key, and sends a signing result to the headset. Because the headset is bound to the first account, and a public key stored in the headset and a private key corresponding to the first account are a pair of asymmetric keys, the headset fails in unsigning the signing result by using the stored public key, and the verification result is that the headset is bound to another account different from the second account.

Before the first electronic device displays the first interface of the first application, the headset performs identity verification on the first account logged in to the first electronic device, where the step of performing, by the headset, identity verification on the first account logged in to the first electronic device includes: The headset sends a second random number to the first electronic device; and the first electronic device signs the second random number by using a stored private key, and sends a signing result to the headset. Because the headset is bound to the first account, and a public key stored in the headset and a private key corresponding to the first account are a pair of asymmetric keys, the headset successfully unsigns the signing result by using the stored public key, and the verification result is that the headset is bound to the first account.

According to a second aspect, an electronic device is provided, and the electronic device includes: a processor, a memory, and an interface. The processor, the memory, and the interface cooperate with each other, so that the electronic device performs any method in the technical solution in the first aspect.

According to a third aspect, a computer-readable storage medium is provided. The computer-readable storage medium stores a computer program. When the computer program is executed by a processor, the processor is enabled to perform any method in the technical solution in the first aspect.

According to a fourth aspect, a computer program product is provided. The computer program product includes: computer program code. When the computer program code is run on an electronic device, the electronic device is enabled to perform any method in the technical solution in the first aspect.

### BRIEF DESCRIPTION OF DRAWINGS

FIG. 1 is a schematic diagram of a structure of an example terminal device 100 according to an embodiment of this application;
FIG. 2 is a block diagram of a software structure of a terminal device 100 according to an embodiment of this application;
FIG. 3 is a schematic diagram of a headset housing;
FIG. 4 is a schematic diagram of another headset housing;
FIG. 5A is a schematic diagram of a first graphical user interface of an electronic device according to an embodiment of this application;
FIG. 5B is a schematic diagram of a second graphical user interface of an electronic device according to an embodiment of this application;
FIG. 6 is an interaction diagram in which an electronic device initiates identity verification to a headset according to an embodiment of this application;
FIG. 7A is an interaction diagram in which an electronic device initiates identity verification to a headset according to an embodiment of this application;
FIG. 7B is another interaction diagram in which an electronic device initiates identity verification to a headset according to an embodiment of this application;
FIG. 8 is an interaction diagram after a headset successfully unsigns signed data according to an embodiment of this application;
FIG. 9 is a schematic diagram of a third graphical user interface of an electronic device according to an embodiment of this application;
FIG. 10 is an interaction diagram after a headset fails in unsigning signed data according to an embodiment of this application;
FIG. 11 is a schematic diagram of user account management according to an embodiment of this application;
FIG. 12A is a schematic diagram of a fourth graphical user interface of an electronic device according to an embodiment of this application;
FIG. 12B is a schematic diagram of a fifth graphical user interface of an electronic device according to an embodiment of this application;
FIG. 12C is a schematic diagram of a sixth graphical user interface of an electronic device according to an embodiment of this application; and
FIG. 13 is a flowchart of an ear temperature data processing method according to an embodiment of this application.

### DESCRIPTION OF EMBODIMENTS

The following describes technical solutions in embodiments of this application with reference to accompanying drawings in embodiments of this application. In the descriptions of embodiments of this application, unless otherwise specified, "/" represents "or". For example, "A/B" may represent A or B. In this specification, "and/or" is merely an association relationship for describing associated objects, and indicates that three relationships may exist. For example, "A and/or B" may indicate the following three cases: Only A exists, both A and B exist, and only B exists. In addition, in the descriptions of embodiments of this application, "a plurality of" refers to two or more.

The following terms "first", "second", and "third" are merely used for description, and cannot be understood as an indication or implication of relative importance or an implicit indication of a quantity of indicated technical features. Therefore, a feature defined by "first", "second", or "third" may explicitly or implicitly include one or more such features.

An ear temperature data processing method provided in the embodiments of this application may be applied to a terminal device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in the embodiments of this application.

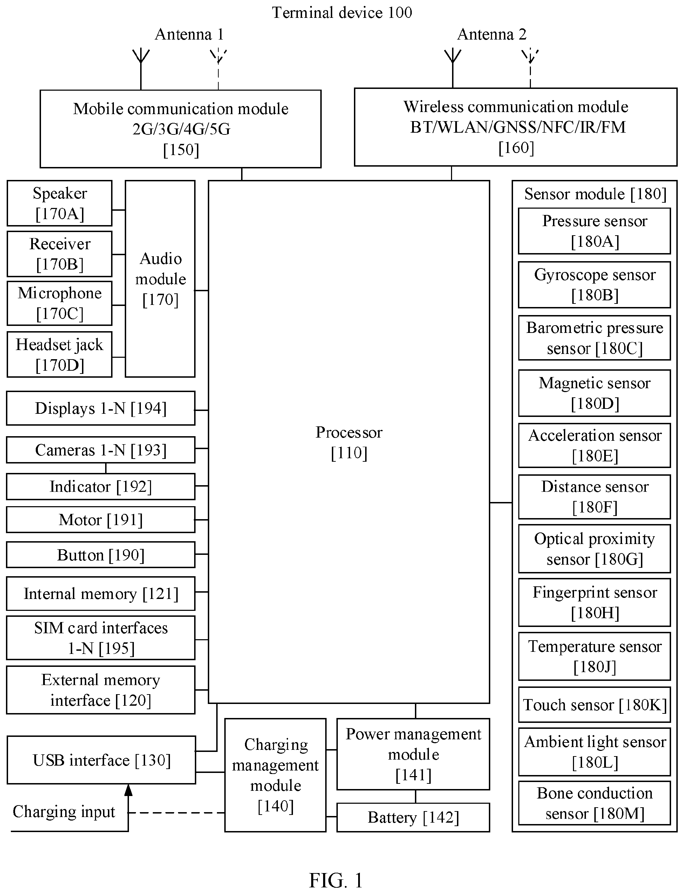

For example, FIG. 1 is a schematic diagram of a structure of an example terminal device 100 according to an embodiment of this application. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device 100. In some other embodiments of this application, the terminal device 100 may include more or fewer components than those shown in the figure, or some components may be combined, or some components may be split, or components may be arranged in different manners. The components shown in the figure may be implemented by using hardware, software, or a combination of software and hardware.

The processor 110 may include one or more processing unit. The processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the terminal device 100. The controller may generate an operation control signal based on instruction operation code and a sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI) interface, a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules shown in this embodiment of this application is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal device 100 implements a display function by using the GPU, the display 194, the application processor, and the like. The GPU is a microprocessor for image processing, and is connected to the display 194 and the application processor. The GPU is configured to perform mathematical and geometric calculation, and is configured to render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a photographing scene. In some embodiments, the ISP may be disposed in the camera 193.

The terminal device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or some functional modules in the audio module 170 may be disposed in the processor 110.

The SIM card interface 195 is configured to connect to a SIM card. The SIM card may be inserted into the SIM card interface 195 or removed from the SIM card interface 195 to come into contact with or be separated from the terminal device 100. The terminal device 100 may support one or N SIM card interfaces, where N is a positive integer greater than 1. The SIM card interface 195 may support a Nano SIM card, a Micro SIM card, a SIM card, or the like. A plurality of cards may be simultaneously inserted into a same SIM card interface 195. The plurality of cards may be of a same type or may be of different types. The SIM card interface 195 may also be compatible with SIM cards of different types. The SIM card interface 195 may also be compatible with an external storage card. The terminal device 100 interacts with a network by using the SIM card, to implement a call function, a data communication function, and the like. In some embodiments, the terminal device 100 uses an eSIM, that is, an embedded SIM card. The eSIM card may be embedded in the terminal device 100, and cannot be separated from the terminal device 100.

A software system of the terminal device 100 may use a layered architecture, an event-driven architecture, a microkernel architecture, a micro-service architecture, or a cloud architecture. In the embodiments of this application, an Android system with a layered architecture is used as an example to describe a software structure of the terminal device 100.

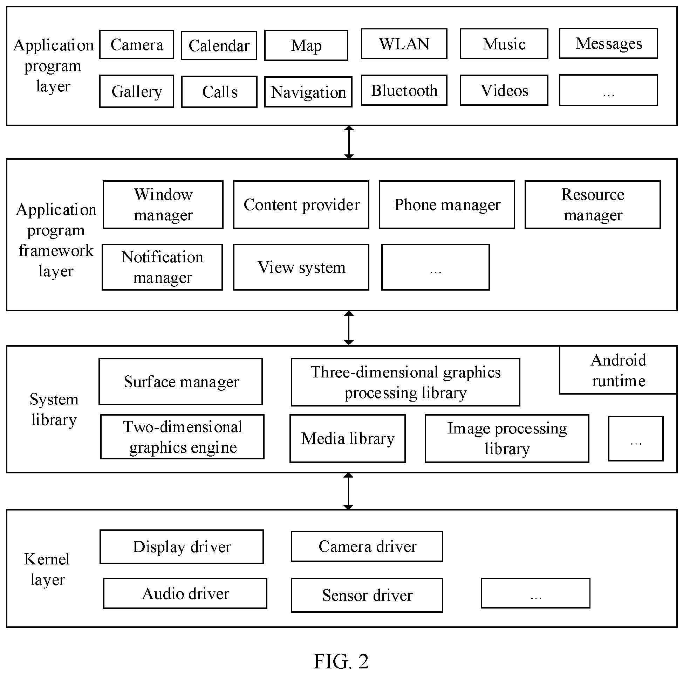

FIG. 2 is a block diagram of a software structure of the terminal device 100 according to an embodiment of this application. The layered architecture divides software into several layers, and each layer has a clear role and task. The layers communicate with each other through a software interface. In some embodiments, the Android system is divided into four layers, which are respectively an application program layer, an application program framework layer, an Android runtime (Android runtime) and system library, and a kernel layer from top to down. The application program layer may include a series of application program packages.

As shown in FIG. 2, the application program packages may include application programs such as Camera, Gallery, Calendar, Calls, Map, Navigation, WLAN, Bluetooth, Music, Video, and Messages.

The application program framework layer provides an application programming interface (application programming interface, API) and a programming framework for application programs at the application program layer. The application program framework layer includes some predefined functions.

As shown in FIG. 2, the application program framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessible by an application program. The data may include videos, images, audio, calls that are made and answered, browsing histories and bookmarks, a phone book, and the like.

The view system includes visual controls, for example, a control for displaying text and a control for displaying a picture. The view system may be configured to create an application program. A display interface may include one or more views. For example, a display interface including a short message notification icon may include a view for displaying text and a view for displaying a picture.

The phone manager is configured to provide a communication function of the terminal device 100, for example, call status management (including answering, hanging up, or the like).

The resource manager provides various resources for an application program, such as a localized string, an icon, a picture, a layout file, and a video file.

The notification manager enables an application program to display notification information in the status bar, and may be configured to convey a notification-type message, where the displayed notification information may automatically disappear after a short stay without user interaction. For example, the notification manager is configured to notify download completion, provide a message notification, and the like. The notification manager may further manage a notification that appears in the status bar at the top of the system in a form of a graph or scroll bar text, for example, a notification of an application program running in the background, or a notification that appears on a screen in a form of a dialog window. For example, text information is prompted in the status bar, a prompt tone is made, the terminal device vibrates, or an indicator light blinks.

The Android runtime includes a kernel library and a virtual machine. The Android runtime is responsible for scheduling and management of the Android system.

The kernel library includes two parts: one part is a functional function that needs to be invoked by a java language, and the other part is the kernel library of Android.

The application program layer and the application program framework layer are run in the virtual machine. The virtual machine executes java files at the application program layer and the application program framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (media libraries), a three-dimensional graphics processing library (for example, OpenGL ES), a two-dimensional graphics engine (for example, SGL), an image processing library, and the like.

The surface manager is configured to manage a display sub-system, and provide fusion of 2D and 3D layers for a plurality of application programs.

The media library supports playback and recording in a plurality of common audio and video formats, a static image file, and the like. The media library may support a plurality of audio and video coding formats, for example, MPEG4, H.264, MP3, AAC, AMR, JPG, and PNG.

The three-dimensional graphics processing library is used to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The headset in the embodiments of this application may be an audio output device, and the headset in the embodiments of this application may be a wireless headset that requires no headset cable, for example, may be a true wireless headset such as a TWS (True Wireless Stereo, true wireless stereo) Bluetooth headset.

For example, the headset in the embodiments of this application may communicate with an electronic device through a wireless connection. For example, the electronic device transmits audio to the headset in the embodiments of this application through the wireless connection. It should be noted that a wireless headset may include a left headset and a right headset, and the left headset and the right headset may cooperate with each other for use by a user, for example, the left headset outputs a left channel, and the right headset outputs a right channel. In some scenarios, only the right headset has a sound or only the left headset has a sound, or a sound volume of the right headset is smaller than that of the left headset, to implement a stereo effect. The left headset and the right headset may alternatively be separately used by the user. For example, the user wears only one of the headsets to listen to audio. Therefore, the headset in the embodiments of this application may be a left headset or a right headset in a pair of headsets. This is not specifically limited. Still in some scenarios, when the wireless headset is not used, the wireless headset may be placed in a headset box. The headset box may have a slot used to place the headset, and may provide a function such as charging for the wireless headset. This is not limited in this application.

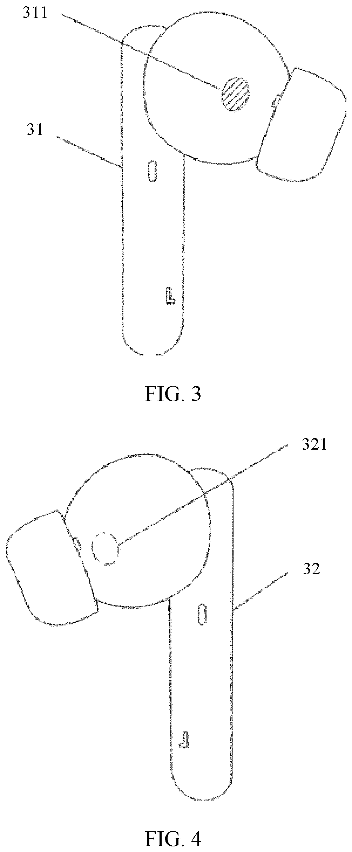

The headset in the embodiments of this application may detect ear temperature data of a wearer. A housing of a headset 31 in FIG. 3 has, on a surface in contact with a human ear, a thermosensitive material 311 that can be used as a temperature sensor, and ear temperature data of a wearer can be detected by using the thermosensitive material 311 and a matched back-end circuit. An infrared temperature sensor 321 is disposed inside a headset 32 in FIG. 4, and the infrared temperature sensor 321 detects ear temperature data of a wearer by using a sound hole of the headset 32. The headset in this application may alternatively have another structure. This is not limited herein.

For ease of understanding, in the following embodiments of this application, the ear temperature data processing method provided in the embodiments of this application is specifically described with reference to the accompanying drawings and application scenarios by using an electronic device having the structures shown in FIG. 1 and FIG. 2 and the wireless headset shown in FIG. 3 or FIG. 4 as examples.

Some headsets may detect and store ear temperature data of a user when being worn by the user. However, when an electronic device connected to the headsets changes, data may be leaked. To resolve a problem of leakage of private data of a user, this application provides an ear temperature data processing method. Headset data herein is used to indicate user data detected by using a headset, and may include ear temperature data and the like. In the following embodiments, the ear temperature data is used as an example for description. The electronic device may be the terminal device described in FIG. 1 and FIG. 2. The electronic device has been paired with the headset in a manner such as Bluetooth, thereby creating a communication relationship with the headset.

In an example, the electronic device runs a first application, and logs in to the first application by using an account. The first application may be HONOR Health, HONOR Life, headset details, or the like. The first application may provide a headset details page, and the headset details page includes an ear temperature data display area. The electronic device may automatically request ear temperature data from the headset, or may request the ear temperature data from the electronic device based on an operation performed by a user in the headset details page.

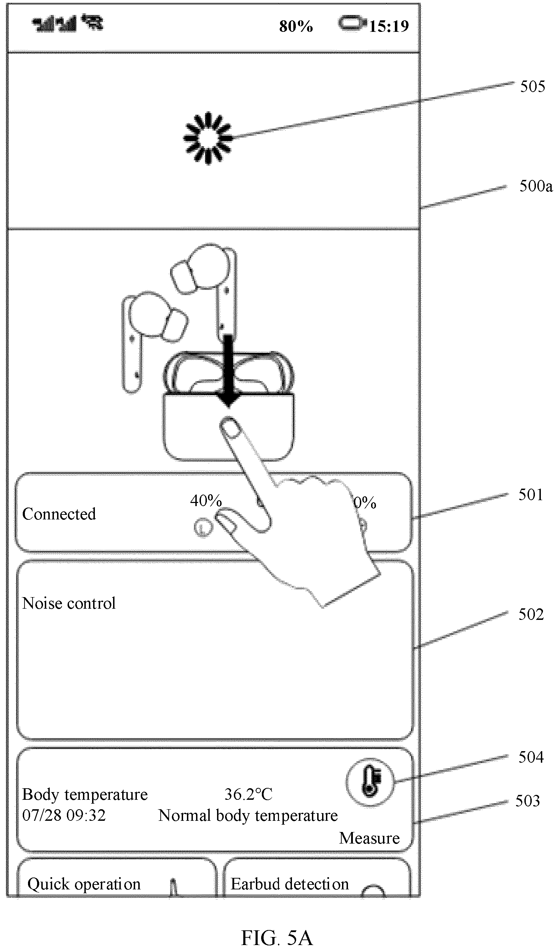

FIG. 5A shows an example of a headset details page. A headset details page 500a includes a status area 501, a control area 502, a body temperature monitoring area 503, and the like. It should be noted that body temperature data displayed in the body temperature monitoring area 503 may be the same as ear temperature data sent by the headset to the electronic device, or may be obtained through a preset operation based on the ear temperature data sent by the headset to the electronic device. This is not limited.

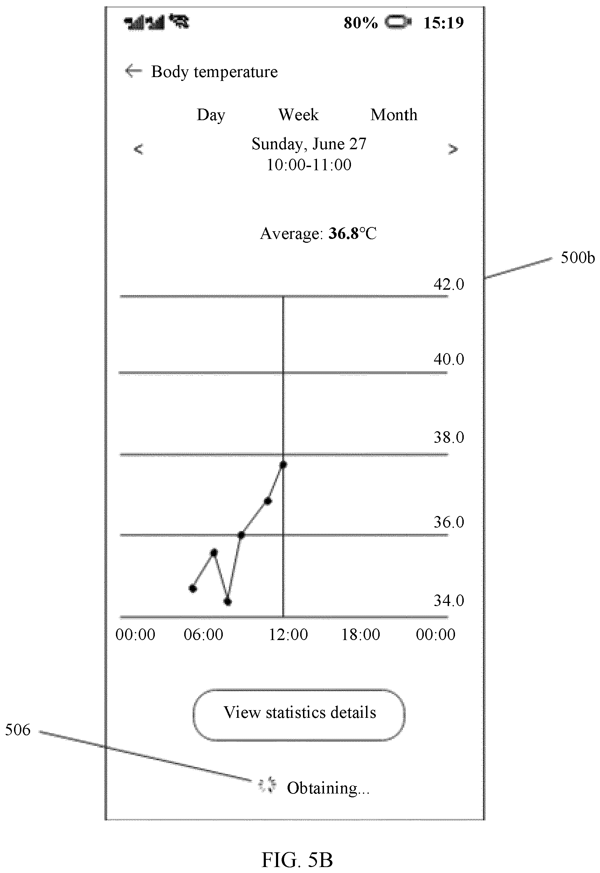

The body temperature monitoring area 503 is used to display most recently obtained ear temperature data. Optionally, when a user pulls down the headset details page, update of the body temperature data in the body temperature monitoring area 503 is triggered, and a refresh identifier 505 is displayed in the headset details page 500a. In this case, the electronic device receives an operation that is input by the user and that is used to request ear temperature data. Optionally, the user taps the body temperature monitoring area 503 to request ear temperature data from the headset, and displays a body temperature monitoring interface 500b shown in FIG. 5B based on ear temperature data obtained through the request. In the body temperature monitoring interface 500b, the body temperature data may be displayed in a manner of a graph by using any one of a day, a week, or a month as a dimension. In FIG. 5B, an identifier 506 may be displayed, and the identifier 506 indicates that the electronic device is requesting the ear temperature data from the headset. In the example, a day is used as a dimension. A body temperature detection result of each hour from 6:00 to 12:00 of the day is displayed, and average body temperature data of the day is displayed. Therefore, when the first application of the electronic device enters the body temperature monitoring interface 500b, the electronic device also receives the operation that is input by the user and that is used to request ear temperature data. The headset details page may further receive another operation used to request ear temperature data, and details are not described herein.

It should be noted that in FIG. 5A, the body temperature monitoring area 503 includes a body temperature measurement control 504. The user may tap the body temperature measurement control 504 to trigger the headset to detect current ear temperature data in real time, and send the ear temperature data detected in real time to the electronic device, so that the body temperature data in the body temperature monitoring area 503 is updated. When the user triggers the body temperature measurement control 504 to collect ear temperature data, because real-time ear temperature data is collected, the obtained ear temperature data is ear temperature data of a user currently wearing the headset, and private data of another user is not leaked. Therefore, when ear temperature data of a user is measured by tapping the body temperature measurement control 504, the electronic device may directly send an ear temperature data obtaining request to the headset without performing step S401. In other words, the operation of triggering the body temperature measurement control 504 does not belong to the operation used to request ear temperature data.

It should be further noted that when the user pulls down the headset details page, the body temperature data in the body temperature monitoring area 503 is updated to most recently measured body temperature data. If the most recently measured ear temperature data is obtained by triggering the body temperature measurement control 504, the current pull-down operation does not belong to the operation used to request ear temperature data. If the most recently measured ear temperature data is collected by the headset based on a period, the current pull-down operation belongs to the operation used to request ear temperature data.

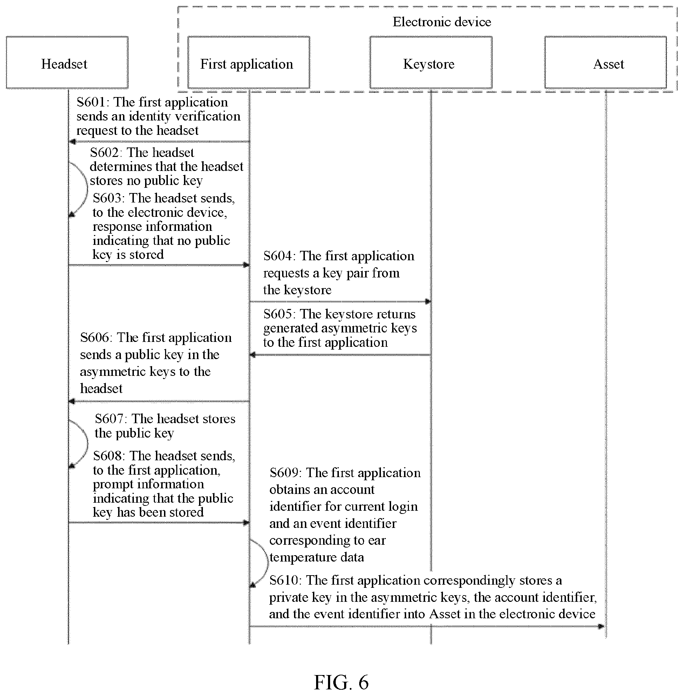

After the electronic device receives the operation used to request ear temperature data, the electronic device initiates identity verification to the headset. FIG. 6 is an interaction diagram in which an electronic device initiates identity verification to a headset according to an embodiment of this application. Reference may be made to FIG. 6.

S601: The first application sends an identity verification request to the headset.

In response to a first input operation, the electronic device sends the identity verification request to the headset. After receiving the identity verification request, the headset determines whether the headset is currently bound to an account.

In an optional implementation, the headset itself may detect whether the headset is idle, and return a detection result to the electronic device as response information. "Idle" herein means that the headset is not bound to any account.

In the solution in this application, after receiving the operation used to request ear temperature data, the electronic device needs to request the ear temperature data from the headset to respond to the operation. If the electronic device directly requests the ear temperature data from the headset, and the headset is previously worn by another user and stores ear temperature data of the another user, private data of the user previously worn the headset may be leaked. Therefore, in the solution in this application, after the electronic device receives the operation used to request ear temperature data, the electronic device does not directly request the ear temperature data from the headset, but first sends the identity verification request to perform identity verification.

S602: The headset determines that the headset stores no public key.

When an account is bound to the headset, the electronic device generates a pair of asymmetric keys for the account currently logged in to the first application, where a public key in the asymmetric keys is stored in the headset, and a private key in the asymmetric keys is stored in the electronic device. Therefore, the headset may determine, by determining whether the headset stores a public key, whether the headset has a binding relationship with an account. If no public key is stored in the headset, it is determined that the headset is currently in an idle state, that is, the headset is not bound to any account.

S603: The headset sends, to the electronic device, response information indicating that no public key is stored.

After the headset sends, to the electronic device, the response information indicating that no public key is stored, the electronic device can determine that the headset is not bound to any account, and therefore can be bound to the headset by using the account currently logged in to the first application.

In this application, security of private data is protected by binding the headset to an account, that is, all ear temperature data has an account to which the ear temperature data belongs. However, when the headset is not bound to any account, the account to which the ear temperature data belongs cannot be determined, and therefore security of private data cannot be protected. Therefore, when the headset is not bound to any account, a first account is first bound to the headset by using the electronic device, and then the ear temperature data is obtained.

In the foregoing step, the first account is bound to the headset by using the electronic device, to assign an account attribute to the headset. When determining that no account is bound to the headset, the headset returns response information to the electronic device. After receiving the response information, the electronic device enters a procedure of binding the first account to the headset.

S604: The first application requests a key pair from a keystore.

The keystore is a capability provided by a system of the electronic device, and may generate a key pair based on a request. In the foregoing step, the keystore may generate, based on the request, a pair of asymmetric keys for an account currently logged in to the first application.

S605: The keystore returns the generated asymmetric keys to the first application.

S606: The first application sends a public key in the asymmetric keys to the headset.

S607: The headset stores the public key.

The headset stores the public key. In this case, the headset is successfully bound to the account currently logged in to the first application.

S608: The headset sends, to the first application, prompt information indicating that the public key has been stored.

S609: The first application obtains an account identifier for current login and an event identifier corresponding to ear temperature data.

S610: The first application correspondingly stores a private key in the asymmetric keys, the account identifier, and the event identifier into Asset in the electronic device.

Asset stores a plurality of keys of the electronic device, rather than only the private key generated in S604. Therefore, when a private key is stored into Asset, an account identifier of the first account, an event identifier, and the foregoing private key further need to be correspondingly stored, so that when the private key is used, the corresponding private key can be read based on the account identifier of the first account and the event identifier. The event identifier is used to indicate a specific type of data that the private key is used to encrypt, to distinguish between keys of different services. For example, an identifier of the ear temperature data may be e-Tem, and an identifier of a step count may be s-Cou, or the like.

When binding between the headset and the account currently logged in to the first application fails, the headset sends, to the application program, prompt information indicating that the binding fails, and the application program may discard the current private key, and return to S604 to re-enter the step of requesting a key pair from a keystore.

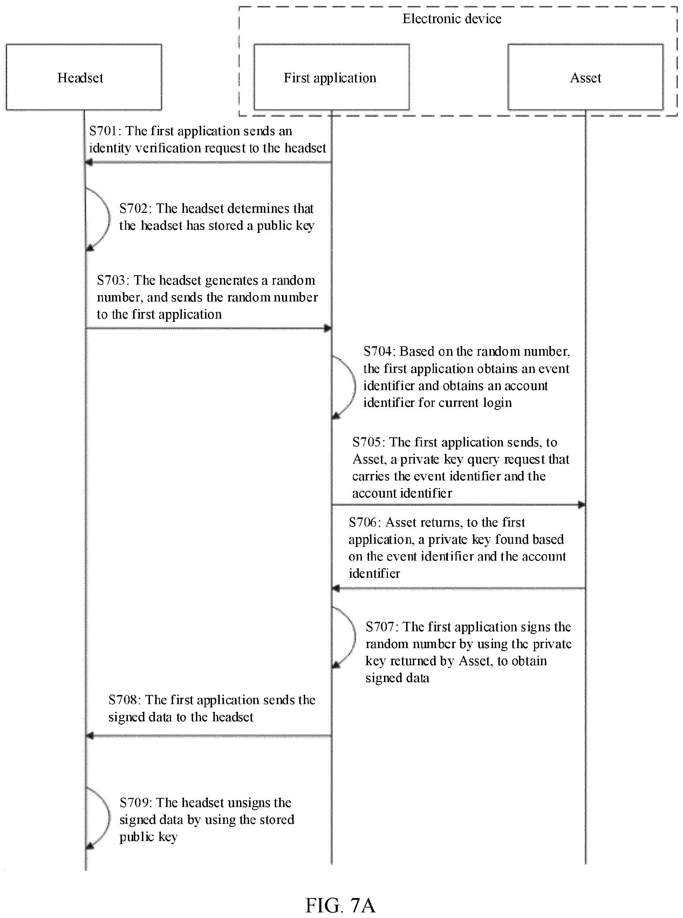

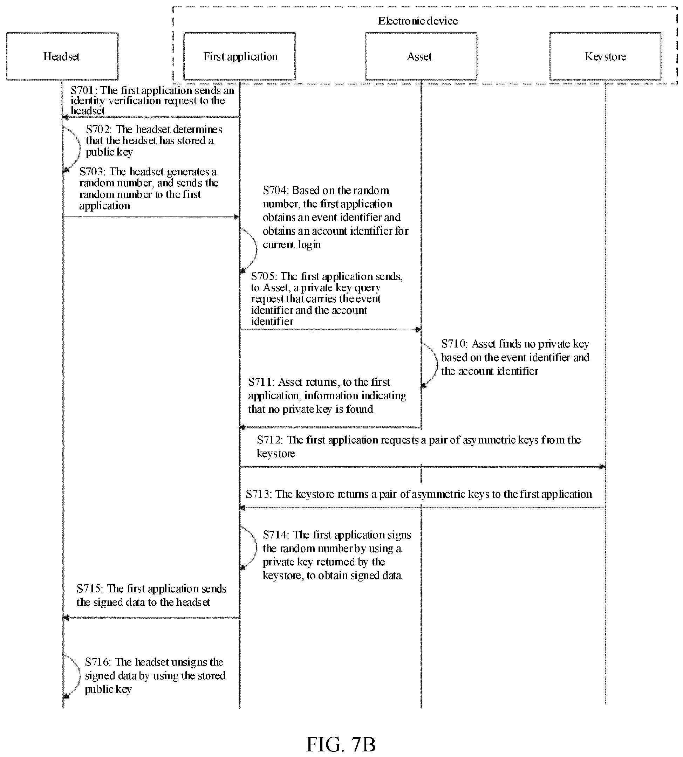

The interaction diagram in FIG. 6 describes a process in which when no account is bound to the headset, an account logged in to the first application on the electronic device is bound to the headset. However, in some other cases, the headset has been bound to an electronic device. When the headset has been bound to any account, an interaction diagram in which an electronic device initiates identity verification to the headset may be shown in FIG. 7A and FIG. 7B. First,

FIG. 7A is used as an example for description.

S701: The first application sends an identity verification request to the headset.

Step S701 is the same as step S601, and details are not described herein again.

S702: The headset determines that the headset has stored a public key.

Based on steps S604-S610, it can be learned that, that the headset determines that the headset has stored a public key means that the headset has a binding relationship with an account. When the headset has been bound to an account, it is required to determine whether the account currently bound to the headset is a first account currently logged in to the first application.

S703: The headset generates a random number, and sends the random number to the first application.

When detecting that the headset has been bound to an account, the headset may directly send the random number to the electronic device.

S704: Based on the random number, the first application obtains an event identifier and obtains an account identifier for current login.

After receiving the random number sent by the headset, the first application can determine that the event identifier is an identifier of ear temperature data.

S705: The first application sends, to Asset, a private key query request that carries the event identifier and the account identifier.

When querying a private key from Asset, an application program needs to send, to Asset, an account identifier of the first account and an event identifier corresponding to headset data, so that Asset can find the corresponding private key based on the account identifier of the account currently logged in to the first application and the event identifier corresponding to the headset data.

S706: Asset returns, to the first application, a private key found based on the event identifier and the account identifier.

Asset finds the private key based on the account identifier of the first account and the event identifier corresponding to the ear temperature data, and returns the found private key to the application program.

S707: The first application signs the random number by using the private key returned by Asset, to obtain signed data.

S708: The first application sends the signed data to the headset.

S709: The headset unsigns the signed data by using the stored public key.

The headset unsigns the signed data by using the stored public key, to obtain an unsigning result. If the unsigning result is the same as the random number in S703, it indicates that the unsigning succeeds, and the public key stored in the headset and the private key requested by the first application from Asset are a pair of keys, that is, the account bound to the headset is the account currently logged in to the first application. If the unsigning result is different from the random number in S703, it indicates that the unsigning fails, and the public key stored in the headset and the private key requested by the application program from Asset are not a pair of keys, that is, the account bound to the headset is not the account currently logged in to the first application.

In S706, there is a specially case in which the account currently logged in to the first application has not been bound to the headset before, and therefore, the private key corresponding to both the account identifier and the event identifier cannot be found from Asset. In this case, as shown in FIG. 7B, S701-S705 in FIG. 7B are already described in FIG. 7A, and details are not described herein again.

S710: Asset finds no private key based on the event identifier and the account identifier.

If the account has not been bound to the headset before, Asset has no private key corresponding to the event identifier and the account identifier.

S711: Asset returns, to the first application, information indicating that no private key is found.

S712: The first application requests a pair of asymmetric keys from a keystore.

S713: The keystore returns a pair of asymmetric keys to the first application.

In step S713, the first application requests a pair of asymmetric keys from the keystore provided by a system. Therefore, the first application may sign the random number by using a private key in the current requested asymmetric keys.

S714: The first application signs the random number by using a private key returned by the keystore, to obtain signed data.

S715: The first application sends the signed data to the headset.

S716: The headset unsigns the data by using the stored public key.

Steps S715-S716 are similar to steps S708-S709, and details are not described herein again.

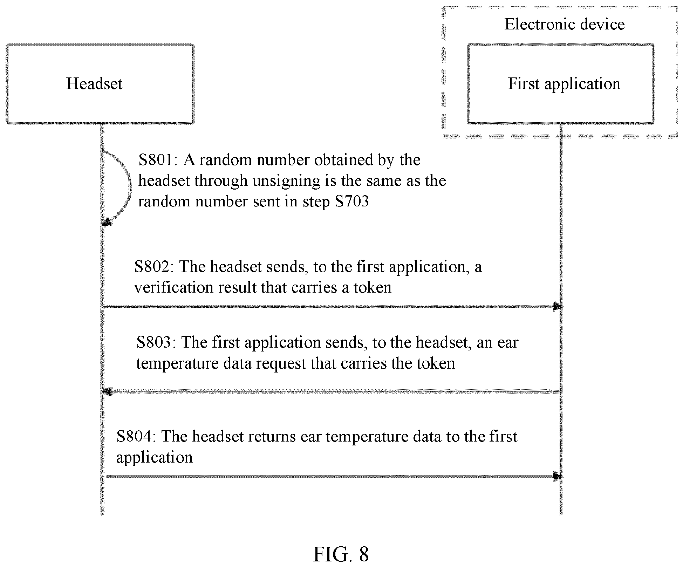

After the headset unsigns the signed data, when the unsigning succeeds, interaction may be performed based on an interaction diagram shown in FIG. 8.

S801: A random number obtained by the headset through unsigning is the same as the random number sent in step S703.

In the example, the random number obtained by the headset through unsigning is the same as the random number sent in step S703, that is, the account bound to the headset is the account currently logged in to the first application. Therefore, the headset can send ear temperature data to the electronic device.

S802: The headset sends, to the first application, a verification result that carries a token.

S803: The first application sends, to the headset, an ear temperature data request that carries the token.

S804: The headset returns ear temperature data to the first application.

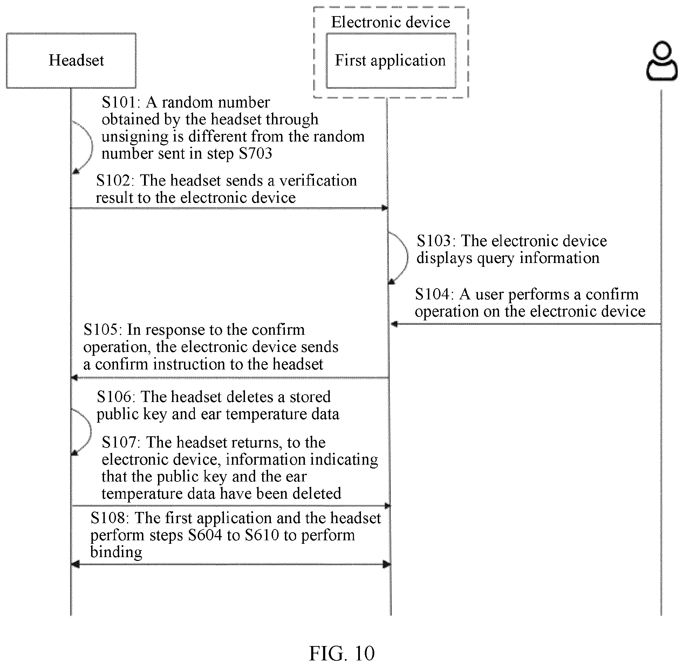

After the headset unsigns the signed data, when the unsigning fails, interaction may be performed based on an interaction diagram shown in FIG. 10.

S101: A random number obtained by the headset through unsigning is different from the random number sent in step S703.

In the example, the random number obtained by the headset through unsigning is different from the random number sent in step S703, that is, the account bound to the headset is not the account currently logged in to the first application. Therefore, the headset forbids stored ear temperature data from being sent to the electronic device.

S102: The headset sends a verification result to the electronic device.

In the example, the headset sends, to the electronic device, a verification result indicating that the verification fails.

S103: The electronic device displays query information.

When the account bound to the headset is not the account currently logged in to the first application, if the headset directly sends the stored ear temperature data to the electronic device, private data of the account currently bound to the headset may be leaked. In the foregoing solution, when the account bound to the headset is not the account currently logged in to the first application, the headset may directly delete the stored ear temperature data, or the electronic device may display the query information, where the query information is used to query a user whether to bind the first account to the headset.

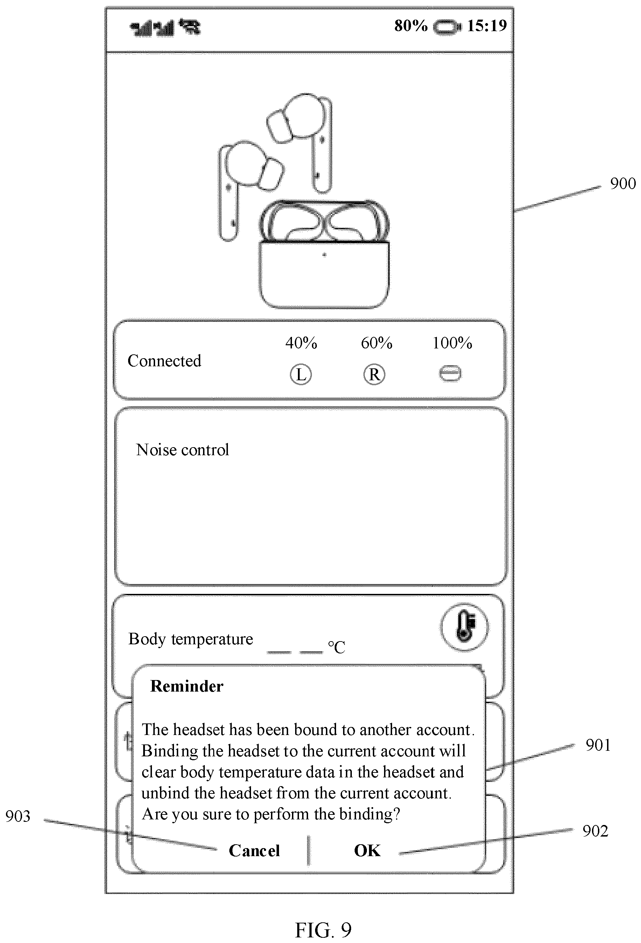

As shown in FIG. 9, when the account bound to the headset is not the account currently logged in to the first application, an interface 900 displays query information 901, which may be specifically: The headset has been bound to another account. Binding the headset to the current account will clear body temperature data in the headset and unbind the headset from the current account. Are you sure to perform the binding? The electronic device prompts, by using the query information, a user that if the account currently logged in to the first application is bound to the headset, the headset is unbound from the currently bound account, and clears stored ear temperature data. If the user selects an OK control 902, the electronic device receives a confirm operation. If the user selects a Cancel control, the user indicates not to bind the first account to the headset, and the request ends herein.

S104: A user performs a confirm operation on the electronic device.

S105: In response to the confirm operation, the electronic device sends a confirm instruction to the headset.

S106: The headset deletes the stored public key and ear temperature data.

That the headset deletes the stored public key means unbinding from the currently bound account.

S107: The headset returns, to the electronic device, information indicating that the public key and the ear temperature data have been deleted.

S108: The first application and the headset perform steps S604 to S610 to perform binding.

A manner of binding the electronic device to the headset may be shown in S604 to S610 in FIG. 6, and details are not described herein again. It should be specially noted that, in the special case mentioned in FIG. 7B, because the first application has requested a pair of asymmetric keys in S712, in a process of binding the account currently logged in to the first application to the headset, the first application does not need to perform S604 to request keys from the keystore again, but directly uses the asymmetric keys obtained in S605 to perform subsequent steps.

It should be noted that, in the solution in this application, the account used to log in to the first application is bound to the headset. Different from a solution in which the electronic device is directly bound to the headset, the account of the first application is bound to the headset, and this can avoid data leakage caused when users who use different accounts log in to the first application on a same electronic device, and can also reduce inconvenience caused when data cannot be shared if users who use a same account change to an electronic device.

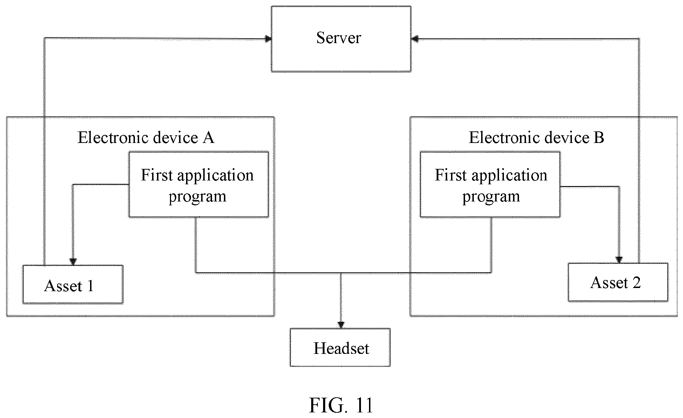

FIG. 11 is a schematic diagram used to describe user account management in this application. With reference to FIG. 11, an electronic device A and an electronic device B are respectively two different electronic devices. The electronic device A and the electronic device B each run a first application (that is, a first application program), and each has its own Asset (that is, Asset 1 and Asset 2). Both the electronic device A and the electronic device B may establish a communication relationship with a headset through Bluetooth. With reference to the binding procedures shown in FIG. 7A and FIG. 7B, it can be learned that when a user binds a first account to the headset on the electronic device A, a keystore of the electronic device A generates a pair of asymmetric keys for the first account. After the binding succeeds, the electronic device A sends a public key in the asymmetric keys to the headset, and stores a private key in the asymmetric keys into Asset 1 of the electronic device A. Subsequently, the electronic device A may further bind the asymmetric keys to the account, upload the asymmetric keys to a server by using Asset 1, and synchronize, by using the server, the asymmetric keys of the first account to the electronic device B to which the first account is logged in. In this manner, when the user logs in to the first account on the electronic device B to request ear temperature data, identity verification may be performed on the first account by using the asymmetric keys of the first account.

Examples in which the foregoing solution is applied to several different scenarios are further described. The following scenarios may include a first mobile phone, a second mobile phone, a third mobile phone, and a headset. In the example, the headset collects ear temperature data on the hour based on a period.

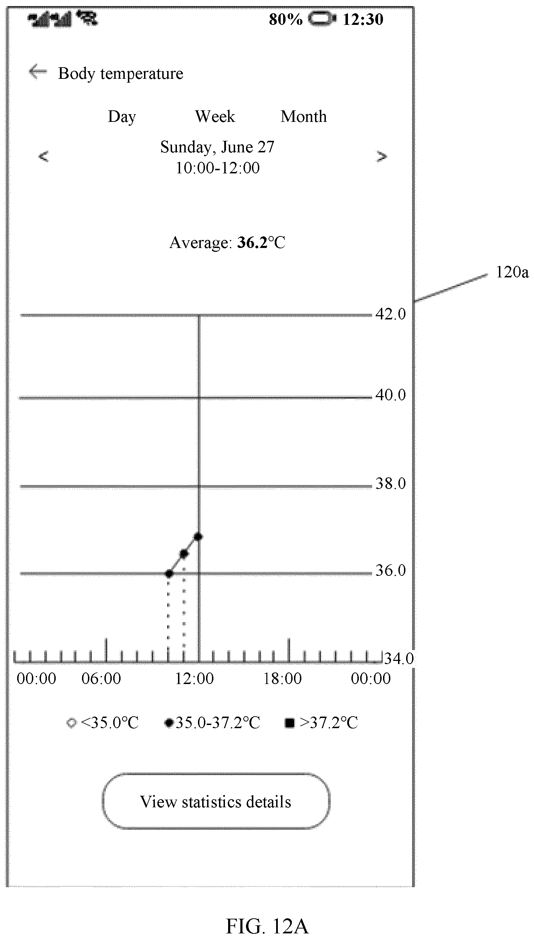

In an optional embodiment, a Bluetooth connection relationship has been established between the first mobile phone and the headset, and the user logs in to HONOR Life on the first mobile phone by using the first account. The user wears the headset at 9:30, starts HONOR Life at 12:30, and taps the body temperature monitoring area 503 in FIG. 5A. In this case, the headset has measured ear temperatures at three moments: 10:00, 11:00, and 12:00. The first mobile phone displays an interface 120a shown in FIG. 12A. The interface 120a displays ear temperatures collected by the headset from 9:30 to 12:30, that is, the ear temperatures at three moments: 10:00, 11:00, and 12:00.

The headset continuously measures the ear temperature, but the user does not continue to obtain the ear temperature on the first phone.

At 13:30, the user performs an operation to disconnect the first mobile phone from the headset, and the second mobile phone is connected to the headset. The user logs in to HONOR Life on the second mobile phone by using a second account. Based on verification that is performed by the headset on an account and that is described in the foregoing embodiment, it can be learned that after the user starts HONOR Life on the second mobile phone and taps the body temperature monitoring area 503, the second mobile phone may display the interface 900 shown in FIG. 9.

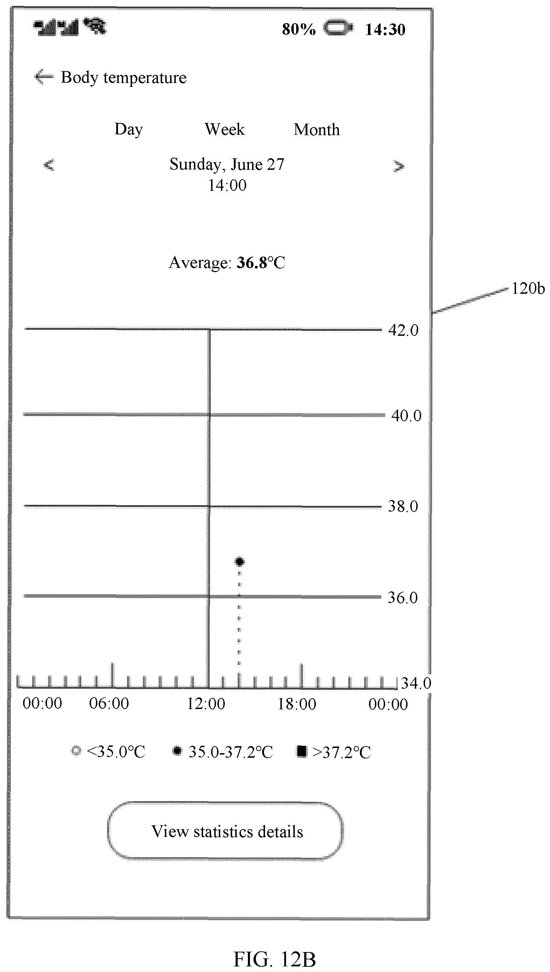

Optionally, the user selects the OK control 902 in the interface 900, so that the headset deletes the previously measured ear temperature, and is bound to the second account. The headset continues to detect an ear temperature. At 14:30, the user starts HONOR Life on the second mobile phone and taps the body temperature monitoring area 503, and the second mobile phone displays an interface 120b shown in FIG. 12B. Because the ear temperature corresponding to the first account is deleted, the interface 120b shows only an ear temperature collected by the headset after the second account is bound to the headset, that is, an ear temperature collected by the headset at 14:00. After 14:30, the user performs an operation to disconnect the second mobile phone from the headset, and the first mobile phone is connected to the headset again. The user starts HONOR Life on the first mobile phone and taps the body temperature monitoring area 503. Because the ear temperature corresponding to the first account has been deleted, and the first mobile phone does not obtain an ear temperature from 12:30 to 13:30, the first mobile phone can display only the ear temperatures from 9:30 to 12:30, but cannot display the ear temperature from 12:30 to 13:30. In other words, ear temperature data displayed by the first mobile phone may be the same as ear temperature data in the interface 120a.

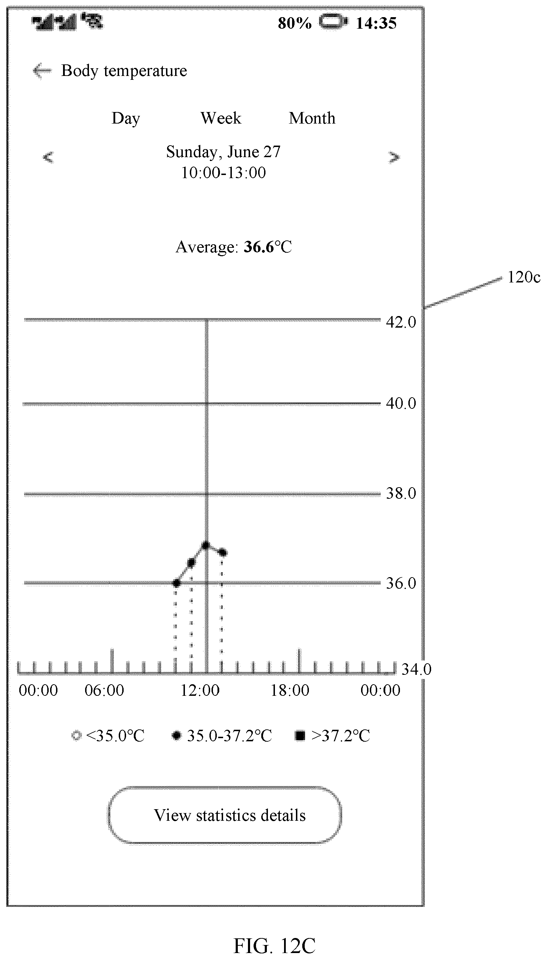

Optionally, the user selects the Cancel control 903 in the interface 900, and the second account is not bound to the headset. Therefore, the second mobile phone cannot periodically measure an ear temperature by using the headset, and can only measure a real-time ear temperature by tapping the body temperature measurement control 504 in FIG. 5A. At 14:30, the user performs an operation to disconnect the second mobile phone from the headset, and the first mobile phone is connected to the headset again. The user starts HONOR Life on the first mobile phone and taps the body temperature monitoring area 503. The first mobile phone may display an interface 120c shown in FIG. 12C. Because the user selects the Cancel control in the interface 900, the headset does not delete the ear temperature corresponding to the first account. Therefore, in the interface 120c, all ear temperatures measured from 09:30 to 14:30 may be displayed, that is, ear temperatures measured by the headset at moments 10:00, 11:00, 12:00, and 13:00 may be displayed.

Optionally, at 13:30, the user performs an operation to disconnect the first mobile phone from the headset, and the third mobile phone is connected to the headset. The user logs in to HONOR Life on the third mobile phone by using the first account, and the headset continuously measures an ear temperature. At 14:30, the user starts HONOR Life on the third mobile phone and taps the body temperature monitoring area 503. Although a device connected to the headset is changed, the headset is always bound to the first account because an account logged into HONOR Life on the third mobile phone is still the first account. Therefore, the third mobile phone can display the ear temperatures from 9:30 to 13:30. In other words, ear temperature data displayed by the third mobile phone may be the same as ear temperature data in the interface 120c.

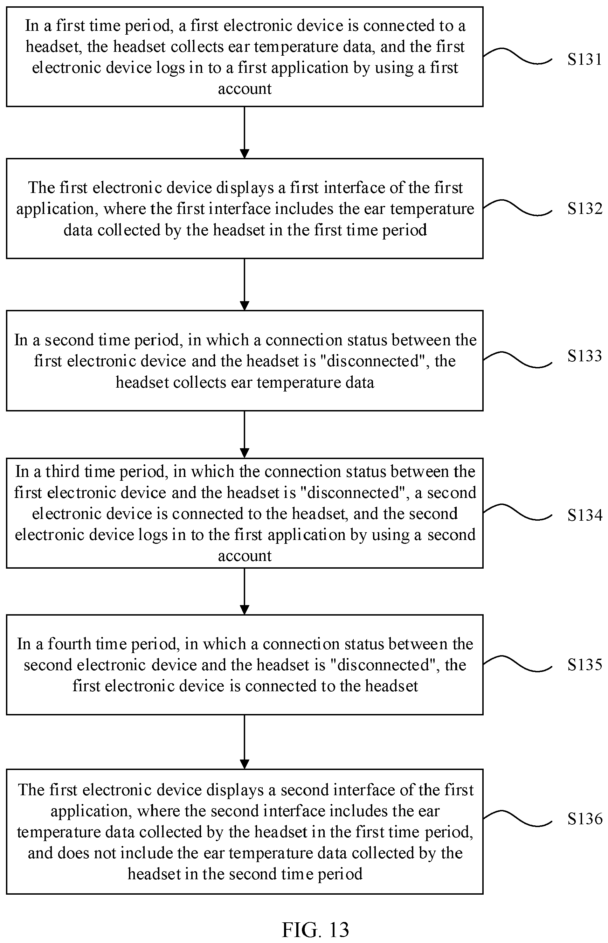

FIG. 13 is a flowchart of an ear temperature data processing method according to an embodiment of this application. The method can be applied to the electronic device shown in FIG. 1. As shown in FIG. 13, the method mainly includes the following steps.

S131: In a first time period, a first electronic device is connected to a headset, the headset collects ear temperature data, and the first electronic device logs in to a first application by using a first account.

That a first electronic device is connected to a headset may be that the first electronic device is connected to the headset through Bluetooth. For example, a headset housing may have a button, a user presses the button on the headset housing, and the headset enters a discovery mode. In this case, the first electronic device can find the headset in Bluetooth, and can be connected to the headset. The first electronic device and the headset may be connected in other manners, which are not enumerated herein.

In the first time period, the headset is in a wearing state, and detects ear temperature data. The first application may be HONOR Health, HONOR Life, headset details, or the like. The first electronic device logs in to the first application by using the first account.

S132: The first electronic device displays a first interface of the first application, where the first interface includes the ear temperature data collected by the headset in the first time period.

In an optional embodiment, the headset collects the ear temperature data on the hour based on a period. A Bluetooth connection relationship has been established between the first electronic device and the headset. The user wears the headset at 9:30, and the user logs in to HONOR Life on the first electronic device by using the first account. The user starts HONOR Life at 12:30, and the first time period is from 9:30 to 12:30. The user taps the body temperature monitoring area 503 in FIG. 5A. In this case, the headset has measured ear temperatures at three moments: 10:00, 11:00, and 12:00. The first interface may be the interface 120a shown in FIG. 12A. The interface 120a displays ear temperatures collected by the headset from 9:30 to 12:30, that is, the ear temperatures at the three moments: 10:00, 11:00, and 12:00.

S133: In a second time period, in which a connection status between the first electronic device and the headset is "disconnected", the headset collects ear temperature data.

Still in the foregoing example, the second time period may be from 12:30 to 13:30. In the second time period, the connection status between the first electronic device and the headset is "disconnected", that is, the first electronic device does not obtain the ear temperature data measured by the headset in the second time period.

S134: In a third time period, in which the connection status between the first electronic device and the headset is "disconnected", a second electronic device is connected to the headset, and the second electronic device logs in to the first application by using a second account.

Still in the foregoing example, the third time period may be from 13:30 to 14:30. In the third time period, the second electronic device is connected to the headset. After the second electronic device is connected to the headset, because the second account logged in to the first application on the second electronic device is different from the first account logged in to the first application on the first electronic device, the headset can automatically delete stored ear temperature data, or delete the stored ear temperature data based on an operation performed by a user on the second electronic device, to avoid leakage of the ear temperature data corresponding to the first account.

S135: In a fourth time period, in which a connection status between the second electronic device and the headset is "disconnected", the first electronic device is connected to the headset.

Still in the foregoing example, the fourth time period may be from 14:30 to 15:30. In the fourth time period, the first electronic device is connected to the headset again.

S136: The first electronic device displays a second interface of the first application, where the second interface includes the ear temperature data collected by the headset in the first time period, and does not include the ear temperature data collected by the headset in the second time period, and the first time period, the second time period, the third time period, and the fourth time period are consecutive time periods in sequence.

After the first electronic device is connected to the headset again, because the headset deletes the stored ear temperature data, when performing refreshing, the first application of the first electronic device cannot obtain, from the headset, the ear temperature data collected by the headset in the first time period and the second time period. However, because the first electronic device has obtained the ear temperature data in the first time period in step S132, although the first electronic device cannot obtain new ear temperature data from the headset, the first electronic device can still display the ear temperature data previously obtained in the first time period, so that the ear temperature data in the second interface can be the same as the ear temperature data in the first interface.

In an implementation, in the third time period, the method further includes: The second electronic device displays a third interface of the first application, where the third interface includes: a first option and a second option; and the second electronic device receives a first operation used to select the first option.

In an optional embodiment, the third interface may be shown in FIG. 9, the first option may be the OK control 902, and the second option may be the Cancel control 903. The user selects the OK control 902 in the interface 900, the headset is unbound from the first account and deletes the stored ear temperature data, and the second account is bound to the headset.

In an implementation, in the third time period, after the second electronic device receives the first operation used to select the first option, the method further includes: The headset collects ear temperature data in the third time period; and the second electronic device displays a fourth interface of the first application, where the fourth interface includes the ear temperature data collected by the headset in the third time period, and does not include the ear temperature data collected by the headset in the first time period and the temperature data collected by the headset in the second time period.

The headset continuously detects the ear temperature data in the third time period. Still in the foregoing example, the headset detects the ear temperature data at 14:00 in the third time period. The fourth interface may be shown in FIG. 12B, and the interface 120b displays the ear temperature data at 14:00.

In an implementation, that the first electronic device displays a first interface of the first application includes: The first electronic device receives a second operation; and the first electronic device displays the first interface of the first application in response to the second operation.

The first operation may be an operation of refreshing data by the user in the first application. For example, the user taps the body temperature monitoring area 503 in the headset details page 500a shown in FIG. 5A.

In an implementation, the first account is bound to the headset, and in the third time period, the method further includes: The second electronic device sends an identity verification request to the headset in response to a third operation performed on the second electronic device; the headset performs identity verification on the second account logged in to the second electronic device, and returns, to the second electronic device, prompt information including a verification result, where the verification result indicates that the headset is bound to the first account; the second electronic device displays a fifth interface, where the fifth interface includes the prompt information, a first option, and a second option, and the prompt information is further used to indicate that the headset deletes stored ear temperature data if the first option is selected; and the second electronic device receives a fourth operation used to select the first option.

The third operation may be an operation of refreshing data by the user in the first application. For example, the user taps the body temperature monitoring area 503 in the headset details page 500a shown in FIG. 5A. After the user performs the third operation, the second electronic device sends the identity verification request to the headset. After performing identity verification on the second account, the headset determines that the second account is not an account currently bound to the headset. Therefore, the second account has no permission to obtain the ear temperature data stored in the headset. The second electronic device displays the fifth interface based on the verification result. The fifth interface may be shown in FIG. 9, the first option may be the OK control 902, and the second option may be the Cancel control 903.

In an implementation, before the first time period, the method further includes: The first account is bound to the headset, where the step of binding the first account to the headset includes: The first electronic device obtains a pair of asymmetric keys, stores a private key in the asymmetric keys, and sends a public key in the asymmetric keys to the headset; and the headset stores the public key.

A manner of binding the first account to the headset may be shown in the foregoing steps S604 to S610, and details are not described herein again.

In an implementation, that the headset performs identity verification on the second account logged in to the second electronic device includes: The headset sends a first random number to the second electronic device; the electronic device signs the first random number by using a stored private key, and sends a signing result to the headset; and the headset fails in unsigning the signing result by using a stored public key, where the verification result is that the headset is bound to another account different from the second account.

A manner in which the headset performs identity verification on the second account may be shown in steps S701 to S709. In step S709, because an account bound to the headset is the first account, the public key stored in the headset and the private key corresponding to the second account are not a pair of keys, that is, the headset fails in unsigning, and therefore it can be determined that an account currently bound to the headset is not the second account.

In an implementation, before the first electronic device displays the first interface of the first application, the headset performs identity verification on the first account logged in to the first electronic device, where the step of performing, by the headset, identity verification on the first account logged in to the first electronic device includes: The headset sends a second random number to the first electronic device; the first electronic device signs the second random number by using a stored private key, and sends a signing result to the headset; and the headset successfully unsigns the signing result by using a stored public key, where the verification result is that the headset is bound to the first account.

A manner in which the headset performs identity verification on the second account may be shown in steps S701 to S709. In step S709, because an account bound to the headset is the first account, the public key stored in the headset and the private key corresponding to the first account are a pair of keys, that is, the headset succeeds in unsigning, and therefore it can be determined that an account currently bound to the headset is the first account.

An embodiment of this application further provides an electronic device, including the foregoing processor. The electronic device provided in this embodiment may be the terminal device 100 shown in FIG. 1, and is configured to perform the foregoing ear temperature data processing method. When an integrated unit is used, the electronic device may include a processing module, a storage module, and a storage module. The processing module may be configured to control and manage an action of the terminal device, for example, may be configured to support the terminal device in performing steps performed by a display unit, a detection unit, and a processing unit. The storage module may be configured to support the terminal device in storing program code, data, and the like. The storage module may be configured to support communication between the terminal device and another device.

The processing module may be a processor or controller. The processing module can implement or execute various example logical blocks, modules, and circuits described with reference to content disclosed in this application. The processor may alternatively be a combination that implements a computing function, for example, a combination of one or more microprocessors or a combination of digital signal processing (digital signal processing, DSP) and a microprocessor. The storage module may be a memory. The communication module may specifically be a radio frequency circuit, a Bluetooth chip, a Wi-Fi chip, or another device that interacts with another terminal device.

In an embodiment, when the processing module is a processor and the storage module is a memory, the terminal device in this embodiment may be a device having the structure shown in FIG. 1.

An embodiment of this application further provides a computer-readable storage medium. The computer-readable storage medium stores a computer program, and when the computer program is executed by a processor, the processor is enabled to perform the ear temperature data processing method according to any one of the foregoing embodiments.

An embodiment of this application further provides a computer program product. When the computer program product is run on a computer, the computer is enabled to perform the foregoing related steps, to implement the ear temperature data processing method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method in the foregoing method embodiments.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

In the several embodiments provided in this application, it should be understood that the disclosed apparatus and method may be implemented in other manners. For example, the described apparatus embodiment is merely an example. For example, the division into the modules or units is merely a logical function division, and there may be another division manner in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, that is, may be located in one place, or may be distributed in a plurality of different places. Some or all of the units may be selected based on an actual requirement to achieve the objectives of the solutions in embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The invention is defined by the claims.

## Claims

1. An ear temperature data processing method, comprising:
in a first time period, connecting, by a first electronic device, to a headset; collecting, by the headset, ear temperature data; and logging in, by the first electronic device, to a first application by using a first account; and
displaying, by the first electronic device, a first interface of the first application, wherein the first interface comprises the ear temperature data collected by the headset in the first time period;
in a second time period, in which a connection status between the first electronic device and the headset is "disconnected", collecting, by the headset, ear temperature data;
in a third time period, in which a connection status between the first electronic device and the headset is "disconnected", connecting, by a second electronic device, to the headset; and logging in, by the second electronic device, to the first application by using a second account; and
in a fourth time period, in which a connection status between the second electronic device and the headset is "disconnected", connecting, by the first electronic device, to the headset; and
displaying, by the first electronic device, a second interface of the first application, wherein the second interface comprises the ear temperature data collected by the headset in the first time period, and does not comprise the ear temperature data collected by the headset in the second time period, wherein
the first time period, the second time period, the third time period, and the fourth time period are consecutive time periods in sequence.

2. The method according to claim 1, wherein in the third time period, the method further comprises:
displaying, by the second electronic device, a third interface of the first application, wherein the third interface comprises: a first option and a second option; and
receiving, by the second electronic device, a first operation used to select the first option.

3. The method according to claim 2, wherein in the third time period, after the receiving, by the second electronic device, a first operation used to select the first option, the method further comprises:
collecting, by the headset, ear temperature data in the third time period; and
displaying, by the second electronic device, a fourth interface of the first application, wherein the fourth interface comprises the ear temperature data collected by the headset in the third time period, and does not comprise the ear temperature data collected by the headset in the first time period and the ear temperature data collected by the headset in the second time period.

4. The method according to claim 1, wherein the displaying, by the first electronic device, a first interface of the first application comprises:
receiving, by the first electronic device, a second operation; and
displaying, by the first electronic device, the first interface of the first application in response to the second operation.

5. The method according to claim 1, wherein the first account is bound to the headset, and in the third time period, the method further comprises:
sending, by the second electronic device, an identity verification request to the headset in response to a third operation performed on the second electronic device;
performing, by the headset, identity verification on the second account logged in to the second electronic device, and returning, to the second electronic device, prompt information comprising a verification result, wherein the verification result indicates that the headset is bound to the first account;
displaying, by the second electronic device, a fifth interface, wherein the fifth interface comprises the prompt information, a first option, and a second option, and the prompt information is further used to indicate that the headset deletes stored ear temperature data if the first option is selected; and
receiving, by the second electronic device, a fourth operation used to select the first option.

6. The method according to claim 1, wherein before the first time period, the method further comprises: binding the first account to the headset, wherein the step of binding the first account to the headset comprises:
obtaining, by the first electronic device, a pair of asymmetric keys, storing a private key in the asymmetric keys, and sending a public key in the asymmetric keys to the headset; and
storing, by the headset, the public key.

7. The method according to claim 5, wherein the performing, by the headset, identity verification on the second account logged in to the second electronic device comprises:
sending, by the headset, a first random number to the second electronic device; and
signing, by the electronic device, the first random number by using a stored private key, and sending a signing result to the headset; wherein
the headset fails in unsigning the signing result by using a stored public key, and the verification result is that the headset is bound to another account different from the second account.

8. The method according to claim 5, wherein before the displaying, by the first electronic device, a first interface of the first application, the method comprises: performing, by the headset, identity verification on the first account logged in to the first electronic device, wherein the step of performing, by the headset, identity verification on the first account logged in to the first electronic device comprises:
sending, by the headset, a second random number to the first electronic device; and
signing, by the first electronic device, the second random number by using a stored private key, and sending a signing result to the headset; wherein
the headset successfully unsigns the signing result by using a stored public key, and the verification result is that the headset is bound to the first account.

9. A system, comprising a first electronic device, a second electronic device, and a headset, the first electronic device and the second electronic device each comprising a memory configured to store computer program instructions and a processor configured to execute the program instructions, wherein when the computer program instructions are executed by the processor, the system is configured to perform the method according to any one of claims 1 to 8.

10. A computer-readable storage medium, wherein the computer-readable storage medium comprises a stored program, and when the program is run by processors in a system comprising a first electronic device, a second electronic device, and a headset, the system is configured to perform the method according to any one of claims 1 to 8.

11. A computer program product, wherein the computer program product comprises executable instructions, and when the executable instructions are executed by processors in a system comprising a first electronic device, a second electronic device, and a headset, the system is configured to perform the method according to any one of claims 1 to 8.

## Patentansprüche

1. Ein Verfahren zur Verarbeitung von Ohrtemperaturdaten, umfassend:
In einem ersten Zeitraum stellt ein erstes elektronisches Gerät eine Verbindung zu einem Headset her; das Headset erfasst Ohrtemperaturdaten; und das erste elektronische Gerät meldet sich mit einem ersten Konto bei einer ersten Anwendung an; und
Anzeige durch das erste elektronische Gerät einer ersten Benutzeroberfläche der ersten Anwendung, wobei die erste Benutzeroberfläche die im ersten Zeitraum vom Headset erfassten Ohrtemperaturdaten umfasst;
In einem zweiten Zeitraum, in dem der Verbindungsstatus zwischen dem ersten elektronischen Gerät und dem Headset "getrennt" ist, erfasst das Headset Ohrtemperaturdaten;
In einem dritten Zeitraum, in dem der Verbindungsstatus zwischen dem ersten elektronischen Gerät und dem Headset "getrennt" ist, stellt ein zweites elektronisches Gerät eine Verbindung zum Headset her; und das zweite elektronische Gerät meldet sich mit einem zweiten Konto bei der ersten Anwendung an; und
In einem vierten Zeitraum, in dem der Verbindungsstatus zwischen dem zweiten elektronischen Gerät und dem Headset "getrennt" ist, stellt das erste elektronische Gerät eine Verbindung zum Headset her; und
Anzeige durch das erste elektronische Gerät einer zweiten Benutzeroberfläche der ersten Anwendung, wobei die zweite Benutzeroberfläche die im ersten Zeitraum vom Headset erfassten Ohrtemperaturdaten umfasst und nicht die im zweiten Zeitraum vom Headset erfassten Ohrtemperaturdaten umfasst, wobei
der erste Zeitraum, der zweite Zeitraum, der dritte Zeitraum und der vierte Zeitraum aufeinanderfolgende Zeiträume in Sequenz sind.

2. Das Verfahren nach Anspruch 1, wobei im dritten Zeitraum das Verfahren weiterhin umfasst:
Anzeige durch das zweite elektronische Gerät einer dritten Benutzeroberfläche der ersten Anwendung, wobei die dritte Benutzeroberfläche eine erste Option und eine zweite Option umfasst; und
Empfangen durch das zweite elektronische Gerät einer ersten Aktion, die zum Auswählen der ersten Option verwendet wird.

3. Das Verfahren nach Anspruch 2, wobei im dritten Zeitraum nach dem Empfangen der ersten Aktion durch das zweite elektronische Gerät zum Auswählen der ersten Option das Verfahren weiterhin umfasst:
Erfassen, durch das Headset, von Ohrtemperaturdaten im dritten Zeitraum; und
Anzeige durch das zweite elektronische Gerät einer vierten Benutzeroberfläche der ersten Anwendung, wobei die vierte Benutzeroberfläche die im dritten Zeitraum vom Headset erfassten Ohrtemperaturdaten umfasst und nicht die im ersten Zeitraum und im zweiten Zeitraum vom Headset erfassten Ohrtemperaturdaten umfasst.

4. Das Verfahren nach Anspruch 1, wobei das Anzeigen einer ersten Oberfläche der ersten Anwendung durch das erste elektronische Gerät Folgendes umfasst:
Empfangen einer zweiten Bedienung durch das erste elektronische Gerät; und
Anzeigen der ersten Oberfläche der ersten Anwendung durch das erste elektronische Gerät als Reaktion auf die zweite Bedienung.

5. Das Verfahren nach Anspruch 1, wobei das erste Konto an das Headset gebunden ist und das Verfahren im dritten Zeitraum ferner Folgendes umfasst:
Senden einer Identitätsüberprüfungsanfrage durch das zweite elektronische Gerät an das Headset als Reaktion auf eine dritte Bedienung, die am zweiten elektronischen Gerät durchgeführt wird;
Durchführen einer Identitätsüberprüfung durch das Headset für das auf dem zweiten elektronischen Gerät angemeldete zweite Konto und Rückgabe von Hinweisinformationen mit einem Überprüfungsergebnis an das zweite elektronische Gerät, wobei das Überprüfungsergebnis angibt, dass das Headset an das erste Konto gebunden ist;
Anzeigen einer fünften Benutzeroberfläche durch das zweite elektronische Gerät, wobei die fünfte Oberfläche die Hinweisinformationen, eine erste Option und eine zweite Option umfasst und die Hinweisinformationen außerdem anzeigen, dass das Headset gespeicherte Ohrtemperaturdaten löscht, wenn die erste Option ausgewählt wird; und
Empfangen einer vierten Bedienung durch das zweite elektronische Gerät, die zur Auswahl der ersten Option verwendet wird.

6. Das Verfahren nach Anspruch 1, wobei vor dem ersten Zeitraum das Verfahren ferner Folgendes umfasst: das erste Konto mit dem Headset zu verbinden, wobei der Schritt der Bindung des ersten Kontos an das Headset Folgendes umfasst:
Erhalten eines Schlüsselpaares asymmetrischer Schlüssel durch das erste elektronische Gerät, Speichern eines privaten Schlüssels der asymmetrischen Schlüssel und Senden eines öffentlichen Schlüssels der asymmetrischen Schlüssel an das Headset; und
Speichern des öffentlichen Schlüssels durch das Headset.

7. Das Verfahren nach Anspruch 5, wobei das Durchführen der Identitätsüberprüfung durch das Headset für das auf dem zweiten elektronischen Gerät angemeldete zweite Konto Folgendes umfasst:
Senden einer ersten Zufallszahl durch das Headset an das zweite elektronische Gerät; und
Signieren der ersten Zufallszahl durch das elektronische Gerät unter Verwendung eines gespeicherten privaten Schlüssels und Senden des Signaturergebnisses an das Headset; wobei
das Headset es nicht schafft, das Signaturergebnis mit einem gespeicherten öffentlichen Schlüssel zu entschlüsseln und das Überprüfungsergebnis ist, dass das Headset an ein anderes, vom zweiten Konto verschiedenes Konto gebunden ist.

8. Verfahren nach Anspruch 5, wobei vor dem Anzeigen einer ersten Benutzeroberfläche der ersten Anwendung durch die erste elektronische Vorrichtung das Verfahren Folgendes umfasst: Durchführen einer Identitätsüberprüfung an dem auf dem ersten elektronischen Gerät angemeldeten ersten Konto durch das Headset, wobei der Schritt des Durchführens der Identitätsüberprüfung an dem beim ersten elektronischen Gerät angemeldeten ersten Konto durch das Headset Folgendes umfasst:
Übermitteln einer zweiten Zufallszahl durch das Headset an das erste elektronische Gerät; und
Signieren der zweiten Zufallszahl durch das erste elektronische Gerät unter Verwendung eines gespeicherten privaten Schlüssels und Übermitteln eines Signierergebnisses an das Headset; wobei
das Headset das Signierergebnis erfolgreich mit einem gespeicherten öffentlichen Schlüssel entsigniert und das Überprüfungsergebnis darin besteht, dass das Headset an das erste Konto gebunden ist.

9. System, umfassend eine erste elektronische Vorrichtung, eine zweite elektronische Vorrichtung und ein Headset, wobei sowohl die erste elektronische Vorrichtung als auch die zweite elektronische Vorrichtung jeweils einen Speicher zur Speicherung von Computerprogramm-Anweisungen und einen Prozessor zur Ausführung der Programm-Anweisungen umfassen, wobei das System beim Ausführen der Computerprogramm-Anweisungen durch den Prozessor dazu konfiguriert ist, das Verfahren gemäß einem der Ansprüche 1 bis 8 auszuführen.

10. Computerlesbares Speichermedium, wobei das computerlesbare Speichermedium ein gespeichertes Programm umfasst und das System, wenn das Programm von Prozessoren in einem System mit einer ersten elektronischen Vorrichtung, einer zweiten elektronischen Vorrichtung und einem Headset ausgeführt wird, dazu konfiguriert ist, das Verfahren gemäß einem der Ansprüche 1 bis 8 auszuführen.

11. Computerprogrammprodukt, wobei das Computerprogrammprodukt ausführbare Anweisungen umfasst und, wenn die ausführbaren Anweisungen von Prozessoren in einem System mit einer ersten elektronischen Vorrichtung, einer zweiten elektronischen Vorrichtung und einem Headset ausgeführt werden, das System dazu konfiguriert ist, das Verfahren gemäß einem der Ansprüche 1 bis 8 auszuführen.

## Revendications

1. Un procédé de traitement de données de température auriculaire, comprenant :
pendant une première période de temps, connexion, par un premier dispositif électronique, à un casque ; collecte, par le casque, de données de température auriculaire ; et connexion, par le premier dispositif électronique, à une première application en utilisant un premier compte ; et
affichage, par le premier dispositif électronique, d'une première interface de la première application, ladite première interface comprenant les données de température auriculaire collectées par le casque pendant la première période de temps ;
pendant une deuxième période de temps, durant laquelle l'état de connexion entre le premier dispositif électronique et le casque est « déconnecté », collecte, par le casque, de données de température auriculaire ;
pendant une troisième période de temps, durant laquelle l'état de connexion entre le premier dispositif électronique et le casque est « déconnecté », connexion, par un second dispositif électronique, au casque ; et connexion, par le second dispositif électronique, à la première application aux moyens d'un second compte ; et
pendant une quatrième période de temps, durant laquelle l'état de connexion entre le second dispositif électronique et le casque est « déconnecté », connexion, par le premier dispositif électronique, au casque ; et
affichage, par le premier dispositif électronique, d'une deuxième interface de la première application, ladite deuxième interface comprenant les données de température auriculaire collectées par le casque pendant la première période de temps, et ne comprenant pas les données de température auriculaire collectées par le casque pendant la deuxième période de temps, dans laquelle
la première période de temps, la deuxième période de temps, la troisième période de temps et la quatrième période de temps sont des périodes de temps consécutives et successives.

2. Le procédé selon la revendication 1, dans lequel, pendant la troisième période de temps, le procédé comprend en outre :
affichage, par le second dispositif électronique, d'une troisième interface de la première application, ladite troisième interface comprenant : une première option et une seconde option ; et
réception, par le second dispositif électronique, d'une première opération servant à sélectionner la première option.

3. Le procédé selon la revendication 2, dans lequel, pendant la troisième période de temps, après la réception, par le second dispositif électronique, d'une première opération servant à sélectionner la première option, le procédé comprend en outre :
collecte, par le casque, de données de température auriculaire pendant la troisième période de temps ; et
affichage, par le second dispositif électronique, d'une quatrième interface de la première application, ladite quatrième interface comprenant les données de température auriculaire collectées par le casque pendant la troisième période de temps, et ne comprenant pas les données de température auriculaire collectées par le casque pendant la première période de temps ni celles collectées pendant la deuxième période de temps.

4. Le procédé selon la revendication 1, dans lequel l'affichage, par le premier dispositif électronique, d'une première interface de la première application comprend :
la réception, par le premier dispositif électronique, d'une seconde opération ; et
l'affichage, par le premier dispositif électronique, de la première interface de la première application en réponse à la seconde opération.

5. Le procédé selon la revendication 1, dans lequel le premier compte est lié au casque, et durant la troisième période, le procédé comprend en outre :
l'envoi, par le deuxième dispositif électronique, d'une demande de vérification d'identité au casque en réponse à une troisième opération réalisée sur le deuxième dispositif électronique ;
l'exécution, par le casque, d'une vérification d'identité sur le deuxième compte connecté au deuxième dispositif électronique, et le retour, au deuxième dispositif électronique, d'une information d'invite contenant un résultat de vérification, ledit résultat indiquant que le casque est lié au premier compte ;
l'affichage, par le deuxième dispositif électronique, d'une cinquième interface, ladite cinquième interface comprenant l'information d'invite, une première option et une seconde option, et l'information d'invite servant également à indiquer que le casque supprime les données stockées de température d'oreille si la première option est sélectionnée ; et
la réception, par le deuxième dispositif électronique, d'une quatrième opération utilisée pour sélectionner la première option.

6. Le procédé selon la revendication 1, dans lequel, avant la première période, le procédé comprend en outre : lier le premier compte au casque, l'étape de liaison du premier compte au casque comprenant :
l'obtention, par le premier dispositif électronique, d'une paire de clés asymétriques, le stockage d'une clé privée dans les clés asymétriques, et l'envoi d'une clé publique des clés asymétriques au casque ; et
le stockage, par le casque, de la clé publique.

7. Le procédé selon la revendication 5, dans lequel l'exécution, par le casque, de la vérification d'identité sur le deuxième compte connecté au deuxième dispositif électronique comprend :
l'envoi, par le casque, d'un premier nombre aléatoire au deuxième dispositif électronique ; et
la signature, par le dispositif électronique, du premier nombre aléatoire au moyen d'une clé privée stockée, et l'envoi du résultat de signature au casque ; où
le casque échoue à la vérification de la signature du résultat de signature à l'aide d'une clé publique stockée, et le résultat de la vérification est que le casque est lié à un autre compte différent du deuxième compte.

8. Procédé selon la revendication 5, dans lequel, avant l'affichage, par le premier dispositif électronique, d'une première interface de la première application, le procédé comprend : la réalisation, par le casque, d'une vérification d'identité sur le premier compte connecté au premier dispositif électronique, la réalisation par le casque de cette vérification comprenant :
l'envoi, par le casque, d'un deuxième nombre aléatoire au premier dispositif électronique ; et
la signature, par le premier dispositif électronique, du deuxième nombre aléatoire à l'aide d'une clé privée stockée, puis l'envoi du résultat de la signature au casque ; où
le casque vérifie avec succès la signature obtenue à l'aide d'une clé publique stockée, et le résultat de la vérification est que le casque est lié au premier compte.

9. Système comprenant un premier dispositif électronique, un second dispositif électronique et un casque, le premier et le second dispositif électronique comprenant chacun une mémoire conçue pour stocker des instructions de programme informatique et un processeur conçu pour exécuter ces instructions, le système étant configuré, lorsque les instructions de programme informatique sont exécutées par le processeur, pour mettre en œuvre le procédé selon l'une quelconque des revendications 1 à 8.

10. Support de stockage lisible par ordinateur, comprenant un programme stocké et, lorsque le programme est exécuté par les processeurs d'un système comprenant un premier dispositif électronique, un second dispositif électronique et un casque, le système étant configuré pour mettre en œuvre le procédé selon l'une quelconque des revendications 1 à 8.

11. Produit programme d'ordinateur, comprenant des instructions exécutables et, lorsque ces instructions exécutables sont mises en œuvre par les processeurs d'un système comprenant un premier dispositif électronique, un second dispositif électronique et un casque, le système étant configuré pour mettre en œuvre le procédé selon l'une quelconque des revendications 1 à 8.
